# EUROPÄISCHE PATENTANMELDUNG

(11) **EP 1 249 909 A1**
(43) Veröffentlichungstag der Anmeldung: **16.10.2002**
(21) Anmeldenummer: 02005155.3
(22) Anmeldetag: 08.03.2002
(51) Int. Cl.: H02B 1/052

(54) **Schnellbefestigungsvorrichtung**

(30) Priorität: 11.04.2001 DE 10118099
(71) Anmelder: ABB PATENT GmbH, 68526 Ladenburg (DE)
(72) Erfinder: Habedank, Winrich, Dr.-Ing., 69181 Leimen (DE); Eppe, Klaus-Peter, Dipl.-Ing., 69429 Waldbrunn (DE); Weber, Ralf, Dipl.-Ing., 69123 Heidelberg (DE)
(74) Vertreter: Miller, Toivo

(57) **Zusammenfassung**

Es wird eine Schnellbefestigungsvorrichtung zur Fixierung eines Installationsgerätes (16) an einer Tragschienenanordnung (10) beschrieben. Die Tragschienenanordnung (10) besitzt eine Trägerplatte (11) und eine Hutprofilschiene (12). An der Trägerplatte (11) ist ein federnder Schnapphaken (23) mit einer zur Hutprofiltragschiene (12) hinweisenden Nase (31) angeformt, die in der eine Vertiefung (30) an der Schmalseitenwand (29) des Installationsgerätes (16) eingeschnappt wird.

## Beschreibung

Die Erfindung betrifft eine Schnellbefestigungsvorrichtung nach dem Oberbegriff des Anspruches 1.

Aus der EP 0821 454 ist eine Anschlußvorrichtung für elektrische Installationsgeräte bekannt geworden, die eine Trägerplatte und eine damit verbundene Hutprofiltragschiene umfasst; innerhalb der Trägerplatte, die als Gehäuse ausgebildet ist, befinden sich Stromsammelschienen. Wenn ein Installationsgerät, welches an der Befestigungsseite eine Ausnehmung mit einer beweglichen und einer festen Nase aufweist, auf die Hutprofiltragschiene aufgeschnappt wird, dann hintergreift die feststehende Nase eine Längskante der Hutprofiltragschiene und durch Verschwenken des Installationsgerätes um den Berührungspunkt Nase/Längskante der Hutprofiltragschiene kann, wenn eine bewegliche Nase tatsächlich vorhanden ist, diese bewegliche Nase hinter die andere Längskante der Hutprofiltragschiene verrasten. Bei der in der EP 0821 454 beschriebenen Anordnung befinden sich auf der Befestigungsseite des Installationsgerätes nach unten vorspringende Anschlußfahnen, die mit den innerhalb des Gehäuses befindlichen Stromsammelschienen in Steckverbindung verbunden werden.

Aufgabe der Erfindung ist es, eine Schnellbefestigungsvorrichtung der eingangs genannten Art zu schaffen, wenn eine Fixierung des Installationsgerätes durch die Steckverbindung allein nicht ausreicht und eine bewegbare Nase am Installationsgerät nicht vorhanden ist.

Diese Aufgabe wird erfindungsgemäß durch die Merkmale des Anspruches 1 gelöst.

Erfindungsgemäß also ist die Schnellbefestigungsvorrichtung dadurch gekennzeichnet, dass an der Trägerplatte ein federnder Schnapphaken mit einer zur Hutprofilschiene hinweisenden Hakennase angeformt ist, der hinter eine Vertiefung an der Schmalseitenwand des Installationsgerätes einschnappbar ist.

Gemäß einer vorteilhaften Ausgestaltung der Erfindung gemäß Anspruch 2 ist die Vertiefung an der Schmalseitenwand, die der bewegbaren Nase benachbart bzw. der feststehenden Nase entgegengesetzt liegt, und der Schnapphaken ist so angeordnet, dass bei der Montage des Installationsgerätes die Vertiefung hinter die Hakennase bzw. die Hakennase hinter die Vertiefung schnappt.

Damit wird erreicht, das eine Fixierung des Installationsgerätes sowie eine Entriegelung an der Hutprofilschiene auf einfache Weise möglich ist.

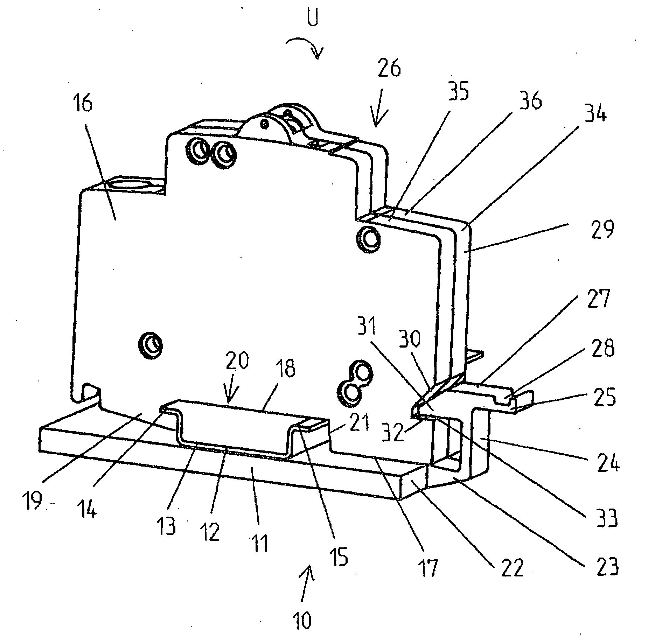

Anhand der Zeichnung, in der ein Ausführungsbeispiel der Erfindung dargestellt ist, sollen die Erfindung sowie weitere vorteilhafte Ausgestaltungen und Verbesserungen sowie weitere Vorteile der Erfindung näher erläutert und beschrieben werden.

### Es zeigt:

- Die einzige Fig.: ein auf einer Trägeranordnung aufgeschnapptes Installationsgerät in perspektivischer Darstellung.

Eine Trägeranordnung 10 setzt sich aus einer Trägerplatte 11 und einer darauf befestigten Hutprofilschiene 12 zusammen, wobei die Hutprofilschiene 12 ein an sich bekanntes Bauelement ist. Sie besitzt einen Steg 13 sowie zwei parallel zum Steg 13 verlaufende Schenkel 14 und 15. Auf der Trägeranordnung 10 ist ein Installationsgerät 16 montiert, welches - in üblicher Weise -an seiner Befestigungsfläche des 17 eine Ausnehmung 18 aufweist, die an der linken Seite (siehe Zeichnung) eine feststehende Nase 19 aufweist, die eine V - förmige Hinterschneidung bildet, wobei der eine Schenkel der V - Form in die Bodenseite 20 der Ausnehmung 18 mündet. Die gegenüberliegende Begrenzung der Ausnehmung 18 ist durch eine Begrenzungswand 21 gebildet; innerhalb des Installationsgerätes 16 kann dabei eine bewegbare Nase vorgesehen sein, die hier weggelassen ist bzw. nicht erforderlich ist. Eine solche bewegbare Nase ist ebenfalls in üblicher Weise bei jedem Installationsgerät zu finden.

An der parallel zur Hutprofiltragschiene 12 verlaufenden Längskante 22 der Trägerplatte 11, und zwar auf der Seite, die der Begrenzungswand 21 benachbart ist, ist ein etwa Z - förmiger Schnapphaken 23 angeformt, dessen erster Schenkel 24 senkrecht zur Längskante 22 und in Richtung der Ebene der Trägerplatte 11 verläuft; an dem Schenkel 23 ist ein Steg 24 angeformt, der senkrecht zur Längskante 22 und zur Ebene der Trägerplatte 11 verläuft ; das freie Ende des Steges 24 trägt einen zweiten Schenkel 25, der parallel zum ersten Schenkel 24 verläuft und auf seiner zur Frontseite 26 zugewandten kaum Fläche 27 eine Nut 28 besitzt, in die beispielsweise ein Werkzeug eingreifen kann.

Das Installationsgerät 16 besitzt an seiner Schmalseite 29, die der Begrenzungswand 21 benachbart liegt, eine Vertiefung 30, in die eine Nase 31 am Steg 24 eingreifen kann ; die Vertiefung 30 besitzt eine etwa parallel zur Befestigungsebene verlaufende Schenkelfläche 32, hinter die die dem Steg 24 zugewandte Nasenfläche 33 rasten kann.

In der Zeichnung ist das Installationsgerät 16 auf die Hutprofiltragschiene 12 aufgerastet gezeichnet; zur Montage wird zu nächst das Installationsgerät 16 mit der feststehenden Nase 19 hinter den Schenkel 14 der Tragschiene 12 eingehakt; sodann wird das Installationsgerät um die mit der Längskante des Schenkels 14 gebildete Drehachse im Uhrzeigersinn U verschwenkt, bis die Fläche 20 der Ausnehmung 18 auf dem Schenkel 15 aufliegt und dabei die Nase 31 in die Vertiefung 30 eingerastet ist.

Zur Demontage wird mittels eines Werkzeuges, beispielsweise mittels eines Schraubendrehers, der in die Nut 28 eingesetzt wird, der Schnapphaken 23 federnd in Uhrzeigersinn U aufgebogen, sodass die Nase 31 von der Vertiefung 30 freikommt und das Installationsgerät 16 demontiert werden kann.

Das Gehäuse des Installationsschaltgerätes ist aus zwei schalenförmigen Gehäuseteilen 34 und 35 gebildet; die Vertiefung befindet sich in der Seitenwand des Gehäuseteiles 35. Es besteht natürlich die Möglichkeit, die Vertiefung so zu wählen, dass sie auch in anderen Gehäuseteilen 34 oder mittig im Bereich der Trennfuge 36 der beiden Gehäuseteile 34 und 35 liegen kann.

## Patentansprüche

1. Schnellbefestigungsvorrichtung zur Fixierung eines Installationsgerätes an einer Tragschienenanordung mit einer Trägerplatte und einer darauf befestigten Hutprofilschiene, **dadurch gekennzeichnet, dass** an der Trägerplatte (11) ein federnder Schnapphaken (23) mit einer zur Hutprofiltragschiene (12) hin weisenden Nase in (31) angeformt ist, die hinter eine Vertiefung (30) in der Schmalseitenwand (29) des Installationsgeräts (16) einschnappbar ist.

2. Schnellbefestigungsvorrichtung nach Anspruch 1, wobei das Installationsgerät eine an der Befestigungsseite angeordnete Ausnehmung mit einer feststehenden und ggf. federnd verschiebbaren Nase aufweist, die hinter die Längskanten der Hutprofiltragschiene festrastbar sind, **dadurch gekennzeichnet, dass** die Vertiefung (30) an der Schmalseitenwand (29), die der bewegbaren Nase benachbart ist, und der Schnapphaken (23) so an der Trägerplatte angeformt ist, dass das Installationsgerät an der Hutprofiltragschiene eingehängt und der Schnapphaken in die Vertiefung eingerastet werden kann.

3. Schnellbefestigungsvorrichtung nach einem der Ansprüche 1 und 2, bei der die Trägerplatte 11 eine Breite aufweist, die dem Abstand der Schmalseitenwänden des Installationsgerätes entspricht, **dadurch gekennzeichnet, dass** der Schnapphaken Zförmig ausgebildet ist, wobei der eine Schenkel an der Längskante der Trägerplatte und die Nase (31) an Steg (24) angeformt sind.

4. Schnellbefestigungsvorrichtung nach einem der vorigen Ansprüche, wobei das Installationsgerät ein Gehäuse mit zwei schalenförmigen Gehäuseteilen besitzt, **dadurch gekennzeichnet, dass** die Vertiefung in einem der Gehäuseteile eingebracht ist.

5. Schnellbefestigungsvorrichtung nach einem der Ansprüche 1 bis 3, bei deren die Trägerplatte eine Breite besitzt, die größer ist als der Abstand der Schmalseitenwände des Installationsgerätes, **dadurch gekennzeichnet, dass** der Schnapphaken eine L-Form besitzt, dessen einer Schenkel senkrecht zur Trägerplatte ausgebildet und die Nase trägt und der andere Schenkel parallel zur Trägerplatte vom Installationsgerät weg verläuft.

6. Schnellbefestigungsvorrichtung nach einem der Ansprüche 3 bis 5, **dadurch gekennzeichnet, dass** der von der Hutprofiltragschiene weg beißende Schenkel des Schnapphakens auf der der Trägerplatte entgegengesetzt liegenden Seite eine Nut aufweist, die parallel zur Hutprofilschiene verläuft und zur Aufnahme eines Werkzeuges dient.
